# EUROPÄISCHE PATENTSCHRIFT

(11) **EP 4 448 349 B1**
(45) Veröffentlichungstag und Bekanntmachung des Hinweises auf die Patenterteilung: **13.05.2026**
(21) Anmeldenummer: 22829688.5
(22) Anmeldetag: 05.12.2022
(51) Int. Cl.: B60T 7/04, B60T 8/40, B60T 13/14, B60T 13/74, B60T 17/02

(54) **BREMSANLAGE FÜR EIN KRAFTFAHRZEUG**
BRAKE SYSTEM FOR A MOTOR VEHICLE
SYSTÈME DE FREIN POUR VÉHICULE À MOTEUR

(30) Priorität: 14.12.2021 DE 102021214332
(43) Veröffentlichungstag der Anmeldung: 23.10.2024
(73) Patentinhaber: AUMOVIO Germany GmbH, 60488 Frankfurt am Main (DE)
(72) Erfinder: COURTH, Christian, 30175 Hannover (DE); BILLER, Harald, 30175 Hannover (DE); HITZEL, Michael, 30175 Hannover (DE)
(74) Vertreter: Aumovio Corporation
(86) Internationale Anmeldenummer: PCT/DE2022/200290
(87) Internationale Veröffentlichungsnummer: WO 2023/110031

(56) Entgegenhaltungen:
- DE-A1- 102017 216 617
- DE-A1- 102017 222 445
- DE-A1- 102019 207 088

## Beschreibung

Die Erfindung betrifft eine Bremsanlage für ein Kraftfahrzeug für zumindest vier hydraulisch betätigbare Radbremsen mit einer ersten elektrisch betätigbaren Druckquelle, einer zweiten elektrisch betätigbaren Druckquelle, einem elektrisch betätigbaren Einlassventil je Radbremse, einem elektrisch betätigbaren Auslassventil je Radbremse und einem Druckmittelvorratsbehälter.

Aus der WO 2018/130483 A1 ist eine Bremsanlage mit zwei elektrisch steuerbaren Druckquellen für ein Kraftfahrzeug mit vier hydraulisch betätigbaren Radbremsen bekannt. Die Bremsanlage umfasst neben radindividuellen elektrisch ansteuerbaren Einlass- und Auslassventilen ein elektrisch ansteuerbares Kreistrennventil sowie zumindest weitere drei elektrisch ansteuerbare Ventile. Die genannten Komponenten sind gemeinsam in einer einzigen Baueinheit angeordnet. Weiterhin sind zwei elektronische Steuer- und Regeleinheiten vorgesehen, wobei eine der elektronischen Steuer- und Regeleinheiten die zweite Druckquelle sowie die Einlass- und Auslassventile ansteuert, während die erste Druckquelle sowie alle übrigen Ventile von der anderen elektronische Steuer- und Regeleinheit angesteuert werden.

In der DE 10 2018 222 478 A1 wird eine Bremsanlage offenbart, welche zwei elektrisch steuerbare Druckquellen sowie einen bremspedalbetätigbaren Hauptbremszylinder, radindividuelle elektrisch ansteuerbare Einlass- und Auslassventile, ein elektrisch ansteuerbares Kreistrennventil, ein elektrisch ansteuerbares Pumpenventil für die zweite elektrisch steuerbare Druckquelle sowie ein stromlos geschlossenes Zuschaltventil für die erste elektrisch steuerbare Druckquelle umfasst. Dabei sind die zweite elektrisch steuerbare Druckquelle, das ihr zugeordnete Pumpenventil und die Einlass- und Auslassventile in einem zweiten Modul und der Hauptbremszylinder mit zugeordnetem Fahrertrennventil und Simulator, die erste elektrisch steuerbare Druckquelle, das ihr zugeordnete stromlos geschlossen ausgeführte Zuschaltventil und das Kreistrennventil in einem ersten Modul angeordnet.

In der DE 10 2019 207088A1 wird eine Bremsanlage beschrieben, welche einen bremspedalbetätigbaren Hauptbremszylinder, eine erste und eine zweite elektrisch steuerbare Druckbereitstellungseinrichtung und einen ersten Bremskreisdruckleitungsabschnitt zur Verbindung mit ersten Radbremsen und einen zweiten Bremskreisdruckleitungsabschnitt zur Verbindung mit zweiten Radbremsen aufweist. Die Saugseite der zweiten Druckbereitstellungseinrichtung ist mit dem ersten Bremsdruckleitungsabschnitt verbunden und die Druckseite mit den Einlassventilen der zugeordneten Radbremsen. Zwischen einem der Bremskreisdruckleitungsabschnitte und einem Druckmittelvorratsbehälter ist eine hydraulische Verbindung mit einem elektrisch betätigbaren Ablassventil vorgesehen.

In der DE 102017 222445 A1 wird eine Bremsanalage offenbart, die eine erste und eine zweite elektrisch steuerbare Druckbereitstellungseinrichtung aufweist. Die erste Druckbereitstellungseinrichtung ist mit einer Bremsversorgungsleitung verbunden, an welche die Radbremsen angeschlossen sind. Eine erste elektrische Einrichtung steuert die erste Druckbereitstellungseinrichtung an und sind beide einer ersten elektrischen Partition zugeordnet. Eine zweite elektrische Einrichtung steuert die zweite Druckbereitstellungseinrichtung und die Einlass- und Auslassventile an. Diese sind der zweiten Partition zugeordnet.

In der DE 10 2017 216617 A1 wird eine Bremsanlage beschrieben mit einer ersten elektrisch steuerbaren Druckquelle, die über ein erstes Trennventil mit einer ersten Bremskreisversorgungsleitung trennbar verbunden ist, welche mit zwei Einlassventilen verbunden ist. Weiterhin wird eine zweite elektrisch steuerbaren Druckquelle beschrieben, die über ein zweites Trennventil mit einer zweiten Bremskreisversorgungsleitung trennbar verbunden ist, welche mit zwei anderen Einlassventilen verbunden ist. Eine Kreistrennvorrichtung kann der beiden Bremskreisversorgungsleitungen miteinander verbinden oder voneinander trenne. Eine erste elektronische Vorrichtung betätigt die erste Druckquelle und das zweite Trennventil und eine zweite elektronische Vorrichtung betätigt die zweite Druckquelle und das erste Trennventil.

Es ist eine Aufgabe der vorliegenden Erfindung, eine verbesserte, für das hochautomatisierte Fahren geeignete Bremsanlage bereitzustellen, welche insbesondere die für das hochautomatisierte Fahren notwendige, möglichst hohe Verfügbarkeit bietet.

Eine weitere Aufgabe der Erfindung ist es, die Kosten für die Herstellung und den Zusammenbau der Bremsanlage möglichst gering zu halten.

Diese Aufgabe wird erfindungsgemäß durch eine Bremsanlage gemäß Anspruch 1 gelöst.

Der Erfindung liegt der Gedanke zugrunde, dass die Bremsanlage eine erste elektrisch betätigbare Druckquelle, eine erste elektronische Steuervorrichtung, eine zweite elektrisch betätigbare Druckquelle, ein elektrisch betätigbares Einlassventil je Radbremse und ein elektrisch betätigbares Auslassventil je Radbremse, eine zweite elektronische Steuervorrichtung und einen Druckmittelvorratsbehälter umfasst, wobei die erste Druckquelle sowie die zweite Druckquelle mit einer Bremsversorgungsleitung verbunden sind, an welche die zumindest vier Einlassventile angeschlossen sind, wobei ein elektrisch betätigbares Kreistrennventil in der Bremsversorgungsleitung derart angeordnet ist, dass bei geschlossenem Kreistrennventil die Bremsversorgungsleitung in einen ersten Leitungsabschnitt und einen zweiten Leitungsabschnitt hydraulisch getrennt wird. Dabei ist der erste Leitungsabschnitt mit der zweiten Druckquelle und zumindest zwei der zumindest vier Einlassventile hydraulisch verbunden. Weiterhin ist der zweite Leitungsabschnitt mit der ersten Druckquelle und den anderen, insbesondere zumindest zwei, der zumindest vier Einlassventilen hydraulisch verbunden. Dabei steuert die erste elektronische Steuervorrichtung die erste Druckquelle an und die zweite elektronische Steuervorrichtung steuert die zweite Druckquelle und die Einlass- und Auslassventile an. Das Kreistrennventil wird ebenfalls von der zweiten elektronischen Steuervorrichtung angesteuert.

In der erfindungsgemäßen Bremsanlage verbindet somit der erste Leitungsabschnitt die zweite Druckquelle mit zumindest zwei der zumindest vier Einlassventilen hydraulisch (erster Bremskreis) und der zweite Leitungsabschnitt verbindet die ersten Druckquelle mit den anderen, insbesondere zumindest zwei, der zumindest vier Einlassventilen hydraulisch (zweiter Bremskreis).

Durch das mittels der zweiten elektronischen Steuervorrichtung angesteuerte Kreistrennventil können in Falle einer Leckage im zweiten Bremskreis die beiden Bremskreise mittels der zweiten elektronischen Steuervorrichtung getrennt werden und die zweite elektronische Steuervorrichtung kann mittels der zweiten Druckquelle in zumindest dem ersten Bremskreis bzw. den dem ersten Bremskreis zugeordneten Radbremsen einen Druck aufbauen.

Die Erfindung bietet den Vorteil, dass durch die Wahl und Anordnung der zwei elektrisch betätigbaren Druckquellen und der elektrisch betätigbaren Ventile in Kombination mit deren speziellen Zuordnung zu den zwei elektronischen Steuervorrichtungen (bzw. die spezielle elektronische Partitionierung) eine Trennung der Eigenschaften der hydraulischen Verbindungen in drucklose bzw. nicht-druckfeste (Ansaug-)Verbindungen und druckfeste (Druck-)Verbindungen ermöglicht wird.

Bevorzugt handelt es sich um einen unter Atmosphärendruck stehenden Druckmittelvorratsbehälter.

Bevorzugt sind die (bzw. alle) Auslassventile über eine gemeinsame hydraulische Rücklaufleitung mit dem Druckmittelvorratsbehälter verbunden.

Bevorzugt ist das Kreistrennventil stromlos offen ausgeführt, so dass im Normalbremsbetrieb, wenn die zumindest vier Radbremsen mittels der ersten Druckquelle mit Druck beaufschlagt werden, oder auch in einer Betriebsart, wenn die zumindest vier Radbremsen mittels der zweiten Druckquelle mit Druck beaufschlagt werden, keine Ansteuerung des Kreistrennventils nötig ist. Dies reduziert den Stromverbrauch der Bremsanlage und vermeidet eventuell störende Ventilschaltgeräusche.

Gemäß einer bevorzugten Ausführungsform der Bremsanlage ist bei geschlossenem Kreistrennventil die zweite Druckquelle über den ersten Leitungsabschnitt mit nur den zumindest zwei der zumindest vier Einlassventile hydraulisch verbunden, während die erste Druckquelle über den zweiten Leitungsabschnitt mit nur den anderen zumindest zwei der zumindest vier Einlassventilen hydraulisch verbunden ist. Dies bedeutet, dass die Bremsanlage bei geschlossenem Kreistrennventil in zwei hydraulische Bremskreise getrennt oder aufgeteilt ist, wobei jeder der Bremskreise eine der Druckquellen und jeweils ein anderes Paar von Einlassventilen umfasst. Dabei ist in dem einen (ersten) Bremskreis die zweite Druckquelle mit den zumindest zwei der zumindest vier Einlassventilen hydraulisch verbunden, und in dem anderen (zweiten) Bremskreis ist die erste Druckquelle mit den anderen Einlassventilen der zumindest vier Einlassventilen hydraulisch verbunden. Ein einer kombinierten Betriebsart können so die Radbremsen, welche dem ersten Bremskreis zugeordnet sind, mittels der zweiten Druckquelle betätigt werden, während die Radbremsen, welche dem zweiten Bremskreis zugeordnet sind, mittels der ersten Druckquelle betätigt werden.

Bevorzugt wird die erste Druckquelle ausschließlich durch die erste elektronische Steuervorrichtung angesteuert bzw. ist die erste Druckquelle ausschließlich durch die erste elektronische Steuervorrichtung ansteuerbar. Die zweite Druckquelle, die Einlass- und Auslassventile und das Kreistrennventil werden bevorzugt ausschließlich durch die zweite elektronische Steuervorrichtung angesteuert bzw. sind ausschließlich durch die zweite elektronische Steuervorrichtung ansteuerbar.

Bevorzugt umfasst die Bremsanlage eine erste elektrische Partition und eine zweite elektrische Partition, welche elektrisch unabhängig voneinander sind, wobei die erste Druckquelle und die erste elektronische Steuervorrichtung der ersten elektrischen Partition zugeordnet sind und die zweite Druckquelle, die zweite elektronische Steuervorrichtung, die Einlass- und Auslassventile und das Kreistrennventil der zweiten elektrischen Partition zugeordnet sind.

Bevorzugt wird die erste elektronischen Steuervorrichtung (bzw. die erste elektrische Partition) von einer ersten elektrischen Energiequelle versorgt und die zweite elektronischen Steuervorrichtung (bzw. die zweite elektrische Partition) wird von einer zweiten elektrischen Energiequelle versorgt, welche von der ersten elektrischen Energiequelle unabhängig ist. Die erste Energiequelle ist dann besonders bevorzugt Teil der ersten elektrischen Partition, die zweite Energiequelle ist Teil der zweiten elektrischen Partition.

Erfindungsgemäß umfasst die Bremsanlage eine erste Baueinheit, in welcher die erste elektrisch betätigbare Druckquelle angeordnet ist, und eine zweite Baueinheit, in welcher die zweite elektrisch betätigbare Druckquelle, die Einlass- und Auslassventile und das Kreistrennventil angeordnet ist.

Erfindungsgemäß umfasst die erste Baueinheit die erste elektronische Steuervorrichtung und die zweite Baueinheit die zweite elektronische Steuervorrichtung.

Bevorzugt ist der Druckmittelvorratsbehälter an der ersten Baueinheit angeordnet.

Gemäß einer bevorzugten Weiterbildung der Erfindung sind die erste Baueinheit und die zweite Baueinheit durch höchstens ein druckfestes hydraulisches Verbindungselement miteinander verbunden. Die erste Baueinheit und die zweite Baueinheit können durch mehrere hydraulische Verbindungselemente miteinander verbunden sein, jedoch ist höchstens eines - im Sinne von nur eines - dieser hydraulischen Verbindungselemente druckfest ausgeführt, nämlich das druckfeste hydraulische Verbindungselement. Eventuelle andere hydraulische Verbindungsleitungen oder -elemente sind nicht druckfest ausgeführt.

Besonders bevorzugt sind die erste Baueinheit und die zweite Baueinheit durch lediglich ein hydraulisches Verbindungselement miteinander verbunden, wobei dieses Verbindungselement druckfest ausgeführt ist, d.h. das druckfeste hydraulische Verbindungselement ist. Weitere, nicht-druckfeste Verbindungselemente/-leitungen, vorteilhafterweise zwischen der zweite Baueinheit und dem Druckmittelvorratsbehälter, sind möglich.

Bevorzugt wird unter einem druckfesten Verbindungselement bzw. einer druckfesten An-/Verbindung verstanden, dass das Verbindungselement bzw. die An-/Verbindung auf einen maximalen Betriebsdruck einer der Druckquellen, insbesondere der ersten Druckquelle, und/oder der Radbremsen ausgelegt ist. Besonders bevorzugt ist das druckfeste Verbindungselement bzw. die druckfeste An-/Verbindung auf einen Druck von etwa 180-220 bar ausgelegt. Ganz besonders bevorzugt ist das druckfeste Verbindungselement bzw. die druckfeste An-/Verbindung auf einen Druck von etwa 200 bar ausgelegt.

Bevorzugt wird unter einem nicht-druckfesten Verbindungselement bzw. einer nicht-druckfesten An-/Verbindung verstanden, dass das Verbindungselement bzw. die An-/Verbindung nicht auf den maximalen Betriebsdruck der Radbremsen ausgelegt ist. Besonders bevorzugt ist ein nicht-druckfestes Verbindungselement bzw. eine nicht-druckfeste An-/Verbindung auf einen maximalen Druck von etwa 10 bar ausgelegt.

Eine Aufteilung in zwei Baueinheiten bietet gegenüber einer Realisierung in nur einer Baueinheit den Vorteil, dass beide Baueinheiten jeweils kleiner und leichter und deshalb einfacher zu handhaben sind. Sie können auch einfacher auf vorhandenen Produktionsanlagen hergestellt werden. Andererseits führt bei einer Aufteilung in zwei Baueinheiten jede hydraulische Verbindung zwischen diesen Baueinheiten zu erheblichem Aufwand und erheblichen Kosten. Es ist daher besonders vorteilhaft, die Anzahl der hydraulischen Verbindungen möglichst klein zu halten. Es hat sich gezeigt, dass es vorteilhaft ist, die verschiedenen Funktionen von hydraulischen Verbindungen möglichst klar zu trennen. So können Verbindungen, über die Druckmittel angesaugt wird, mit einem möglichst großen Durchmesser ausgeführt werden, damit sie einen möglichst kleinen hydraulischen Widerstand besitzen. Dafür ist es vorteilhaft, wenn erreicht wird, dass solche Verbindungen nicht druckfest sein müssen. Umgekehrt sollten drucktragende Verbindungen keine Ansaugfunktion haben.

Gemäß einer bevorzugten Weiterbildung der Erfindung ist die erste Druckquelle über ein elektrisch betätigbares, erstes Trennventil mit der Bremsversorgungsleitung, insbesondere dem ersten Leitungsabschnitt der Bremsversorgungsleitung, verbunden, wobei das erste Trennventil von der zweiten elektronischen Steuervorrichtung angesteuert wird. So kann mittels der zweiten elektronischen Steuervorrichtung, z.B. im Falle eines Ausfalls der ersten elektronischen Steuervorrichtung, das erste Trennventil geschlossen und ein Abfließen von Druckmittel aus der Bremsversorgungsleitung in Richtung der ersten Druckquelle bzw. ersten Baueinheit verhindert werden.

Das erste Trennventil ist besonders bevorzugt stromlos offen ausgeführt. Durch Schließen des ersten Trennventils kann, z.B. im Fall einer Leckage in der ersten Druckquelle bzw. der ersten Baueinheit, ein Abfließen von Druckmittel von der Bremsversorgungsleitung in die erste Druckquelle bzw. in die erste Baueinheit verhindert werden. Auch kann die erste Druckquelle bzw. die erste Baueinheit mittels des ersten Trennventils hydraulisch von der Bremsversorgungsleitung getrennt werden, z.B. wenn die Bremsanlage in einer Betriebsart betrieben werden soll oder muss (z.B. bei einem elektrischen Ausfall der ersten elektronischen Steuervorrichtung), in welcher die zumindest vier Radbremsen mittels der zweiten Druckquelle mit Druck beaufschlagt werden.

Das erste Trennventil wird besonders bevorzugt ausschließlich durch die zweite elektronische Steuervorrichtung angesteuert bzw. ist ausschließlich durch die zweite elektronische Steuervorrichtung ansteuerbar.

Das erste Trennventil ist somit besonders bevorzugt der zweiten elektrischen Partition zugeordnet.

Besonders bevorzugt ist das erste Trennventil in der zweiten Baueinheit angeordnet.

Besonders bevorzugt ist dem ersten Trennventil ein in Richtung der Bremsversorgungsleitung öffnendes Rückschlagventil parallelgeschaltet. Vorteilhafterweise ist das Rückschlagventil in der zweiten Baueinheit angeordnet.

Besonders bevorzugt ist dem ersten Trennventil ein elektrisch betätigbares, insbesondere stromlos geschlossenes, drittes Trennventil parallelgeschaltet, welches von der zweiten elektronischen Steuervorrichtung angesteuert wird. Vorteilhafterweise ist das dritte Trennventil in der zweiten Baueinheit angeordnet.

Alternativ ist es bevorzugt, dass das erste Trennventil von der ersten elektronischen Steuervorrichtung angesteuert wird, und insbesondere in der ersten Baueinheit angeordnet ist, und stromlos geschlossen ausgeführt ist. So kann im Fall einer Leckage in der ersten Druckquelle durch Schließen des ersten Trennventils ein Abfließen von Druckmittel aus der ersten Druckquelle verhindert werden.

Alternativ ist es bevorzugt, dass die erste Druckquelle ohne Zwischenschaltung eines elektrisch betätigbaren Ventils mit der Bremsversorgungsleitung verbunden ist.

Bevorzugt ist die erste Druckquelle über ein elektrisch betätigbares, zweites Trennventil mit dem Druckmittelvorratsbehälter verbunden, wobei das zweite Trennventil von der ersten elektronischen Steuervorrichtung angesteuert wird. Das zweite Trennventil ist besonders bevorzugt stromlos offen ausgeführt. Über das zweite Trennventil ist, z.B. im stromlosen Zustand der Bremsanlage, ein Abfließen von Druckmittel aus den Radbremsen in den Druckmittelvorratsbehälter möglich, was zur Sicherstellung der Drucklosigkeit der Radbremsen (Abbau von Restbremsmomenten), z.B. bei abgestelltem Fahrzeug, vorteilhaft ist. Besonders bevorzugt ist dem zweiten Trennventil ein in Richtung der ersten Druckquelle öffnendes Rückschlagventil parallelgeschaltet.

Das zweite Trennventil wird besonders bevorzugt ausschließlich durch die erste elektronische Steuervorrichtung angesteuert bzw. ist ausschließlich durch die erste elektronische Steuervorrichtung ansteuerbar.

Das zweite Trennventil ist somit bevorzugt der ersten elektrischen Partition zugeordnet.

Bevorzugt ist das zweite Trennventil in der ersten Baueinheit angeordnet.

Bevorzugt ist die erste Druckquelle bzw. deren Druckraum, insbesondere zum Nachsaugen von Druckmittel, über ein in Richtung der ersten Druckquelle öffnendes Rückschlagventil mit dem Druckmittelvorratsbehälter verbunden. Dieses Rückschlagventil ist besonders bevorzugt zusätzlich zu dem zweiten Trennventil vorgesehen.

Die erste Baueinheit umfasst bevorzugt zumindest einen ersten hydraulischen Anschluss zur Verbindung mit dem Druckmittelvorratsbehälter und einen zweiten hydraulischen Anschluss zur Verbindung mit der zweiten Baueinheit, wobei der zweite hydraulische Anschluss mit dem druckfesten hydraulischen Verbindungselement verbunden ist. Entsprechend muss der zweite hydraulische Anschluss für eine druckfeste Verbindung ausgebildet sein. Der erste hydraulische Anschluss muss nur für eine drucklose (Atmosphären-) bzw. nicht-druckfeste Anbindung ausgebildet sein.

Besonders bevorzugt ist die erste Druckquelle, insbesondere zum Nachsaugen von Druckmittel, insbesondere über ein in Richtung der ersten Druckquelle öffnendes Rückschlagventil, mit dem ersten hydraulischen Anschluss verbunden, und die erste Druckquelle ist, insbesondere zum Betätigen der zumindest vier Radbremsen, mit dem zweiten hydraulischen Anschluss verbunden.

Gemäß einer bevorzugten Weiterbildung der Erfindung umfasst die zweite Baueinheit zumindest vier hydraulische Radanschlüsse zur Verbindung mit den Radbremsen, einen ersten hydraulischen Anschluss zur Verbindung mit dem Druckmittelvorratsbehälter und einen zweiten hydraulischen Anschluss zur Verbindung mit der ersten Baueinheit, wobei der zweite hydraulische Anschluss mit dem druckfesten hydraulischen Verbindungselement verbunden ist. Entsprechend ist der zweite hydraulische Anschluss der zweiten Baueinheit vorteilhafterweise für eine druckfeste Verbindung ausgebildet. Zur Betätigung der Radbremsen sind auch die Radanschlüsse der zweiten Baueinheit für eine druckfeste Verbindung ausgebildet. Wohingegen der erste hydraulische Anschluss der zweiten Baueinheit nur für eine drucklose (Atmosphären-) bzw. nicht-druckfeste Anbindung ausgebildet sein muss.

Besonders bevorzugt umfasst die zweite Baueinheit keinen weiteren hydraulischen Anschluss neben den Radanschlüssen und dem ersten (atmosphärischen) und dem zweiten (druckfesten) Anschluss.

Gemäß einer bevorzugten Weiterbildung der Erfindung sind der erste hydraulische Anschluss der ersten Baueinheit und der erste hydraulische Anschluss der zweiten Baueinheit mit unterschiedlichen Kammern des Druckmittelvorratsbehälters verbunden. So ist eine (zumindest teilweise) Trennung der Druckmittelvorräte für die ersten Baueinheit bzw. erste Druckquelle sowie die zweite Baueinheit bzw. zweite Druckquelle gewährleistet. So wird eine erhöhte Verfügbarkeit der Bremsanlage im Falle einer Leckage erreicht.

Bevorzugt wird die erste Druckquelle durch eine Zylinder-Kolben-Anordnung mit einem hydraulischen Druckraum gebildet, deren Kolben durch einen elektromechanischen Aktuator für einen Bremsdruckaufbau vor- und für einen Bremsdruckabbau zurückgefahren wird.

Besonders bevorzugt wird die erste Druckquelle durch eine Zylinder-Kolben-Anordnung mit einem hydraulischen Druckraum und einem Druckanschluss gebildet, deren Kolben durch einen elektromechanischen Aktuator vor- und zurückgefahren wird. Besonders bevorzugt ist der Druckanschluss über ein in Richtung des Druckraums öffnendes Rückschlagventil hydraulisch mit dem Druckmittelvorratsbehälter verbunden. Besonders bevorzugt ist der Druckanschluss über ein zweites Trennventil hydraulisch mit dem Druckmittelvorratsbehälter verbunden. Ganz besonders bevorzugt ist der Druckanschluss über ein erstes Trennventil hydraulisch mit der Bremsversorgungsleitung, insbesondere dem zweite Leitungsabschnitt der Bremsversorgungsleitung, verbunden.

Besonders bevorzugt wird die erste Druckquelle durch eine Zylinder-Kolben-Anordnung mit einem hydraulischen Druckraum, einem Sauganschluss und einem Druckanschluss gebildet, deren Kolben durch einen elektromechanischen Aktuator vor- und zurückgefahren wird. Besonders bevorzugt ist der Sauganschluss über ein in Richtung des Druckraums öffnendes Rückschlagventil hydraulisch mit dem Druckmittelvorratsbehälter verbunden. Besonders bevorzugt ist der Druckanschluss über ein zweites Trennventil hydraulisch mit dem Druckmittelvorratsbehälter verbunden. Ganz besonders bevorzugt ist der Druckanschluss über ein erstes Trennventil hydraulisch mit der Bremsversorgungsleitung, insbesondere dem zweite Leitungsabschnitt der Bremsversorgungsleitung, verbunden.

Besonders bevorzugt wird die erste Druckquelle durch eine Zylinder-Kolben-Anordnung mit einem hydraulischen Druckraum, einem Sauganschluss, einem Druckanschluss und einem Schnüffelloch gebildet, deren Kolben durch einen elektromechanischen Aktuator vor- und zurückgefahren wird. Der Sauganschluss ist besonders bevorzugt über ein in Richtung des Druckraums öffnendes Rückschlagventil hydraulisch mit dem Druckmittelvorratsbehälter verbunden. Besonders bevorzugt ist das Schnüffelloch hydraulisch mit dem Druckmittelvorratsbehälter verbunden. Im Falle einer Zylinder-Kolben-Anordnung mit Schnüffelloch ist keine Verbindung zwischen Druckanschluss und Druckmittelvorratsbehälter mit einem zweiten Trennventil erforderlich bzw. vorgesehen. Ganz besonders bevorzugt ist der Druckanschluss über ein erstes Trennventil hydraulisch mit der Bremsversorgungsleitung, insbesondere dem zweite Leitungsabschnitt der Bremsversorgungsleitung, verbunden.

Bevorzugt ist die erste Druckquelle derart ausgebildet and hydraulisch angeordnet, dass sie so angesteuert werden kann, dass eine hydraulische Verbindung zwischen dem Druckmittelvorratsbehälter und der Bremsversorgungsleitung hergestellt wird.

Gemäß einer bevorzugten Weiterbildung der Erfindung ist die zweite Druckquelle zwei- oder mehr-kreisig ausgeführt. Besonders bevorzugt ist die zweite Druckquelle als eine Zwei-Kolben-Pumpe oder Mehr-Kolben-Pumpe ausgeführt.

Besonders bevorzugt sind die Druckseiten der zwei- oder mehr-kreisigen Druckquelle zusammengeschaltet (zu einem gemeinsamen Druckanschluss) und die Saugseiten der zwei- oder mehr-kreisigen Druckquelle zusammengeschaltet (zu einem gemeinsamen Sauganschluss). Der Sauganschluss (und damit die Saugseiten) ist besonders bevorzugt mit dem Druckmittelvorratsbehälter, insbesondere mit der Rücklaufleitung der Auslassventile, verbunden. Der Druckanschluss (und damit die Druckseiten) ist besonders bevorzugt mit der Bremsversorgungsleitung, ganz besonders bevorzugt mit dem ersten Leitungsabschnitt der Bremsversorgungsleitung, verbunden.

Bevorzugt umfasst die Bremsanlage neben der ersten und zweiten Druckquelle keine weitere Druckquelle. Bevorzugt umfasst die Bremsanlage weder eine weitere elektrisch betätigbare Druckquelle noch eine Fahrer-betätigbare Druckquelle, wie z.B. einen Hauptbremszylinder, welche mit zumindest einer der Radbremsen zu deren Betätigung wirkverbunden ist, z.B. hydraulisch oder mechanisch verbunden ist.

Gemäß einer bevorzugten Weiterbildung der Erfindung umfasst die Bremsanlage eine Betätigungseinheit für einen Fahrzeugführer, wobei die Betätigungseinheit mit zumindest einer der beiden elektronischen Steuervorrichtungen zur Übermittlung eines Fahrerwunschsignals verbunden ist und wobei keine mechanisch-hydraulische Verbindung von der Betätigungseinheit zu den Radbremsen besteht.

Bevorzugt umfasst die Betätigungseinheit einen ersten Sensor zu Erfassung eines Bremswunsches des Fahrzeugführers und einen zweiten Sensor zu Erfassung eines Bremswunsches des Fahrzeugführers, welcher unabhängig von dem ersten Sensor ist. Bevorzugt ist der erste Sensor der einen der zwei elektrischen Partition zugeordnet und der zweite Sensor der anderen der zwei elektrischen Partition zugeordnet.

Bevorzugt ist der erste Sensor mit einer der beiden elektronischen Steuervorrichtungen signalseitig verbunden und der zweite Sensor mit der anderen der beiden elektronischen Steuervorrichtungen signalseitig verbunden.

Die Erfindung bietet den Vorteil, dass die Bremsanlage auch bei Ausfall einer der beiden redundanten elektrischen Druckquellen, z.B. aufgrund eines Ausfalls der ihr zugeordneten elektrischen Energiequelle oder der ihr zugeordneten elektronischen Steuervorrichtung oder eines mechanischen Fehlers oder einer Leckage in der Druckquelle selbst, die wichtigsten Rest-Bremsfunktionen aufrechterhalten kann.

Die erfindungsgemäße Bremsanlage ist daher besonders zur Realisierung von hochautomatsierten Fahrfunktionen geeignet.

Weitere bevorzugte Ausführungsformen der Erfindung ergeben sich aus den Unteransprüchen und der nachfolgenden Beschreibung anhand von Figuren.

Es zeigen schematisch
- Fig. 1: ein erstes Ausführungsbeispiel einer erfindungsgemäßen Bremsanlage,
- Fig. 2: ein zweites Ausführungsbeispiel einer erfindungsgemäßen Bremsanlage,
- Fig. 3: ein drittes Ausführungsbeispiel einer erfindungsgemäßen Bremsanlage,
- Fig. 4: ein viertes Ausführungsbeispiel einer erfindungsgemäßen Bremsanlage,
- Fig. 5: ein fünftes Ausführungsbeispiel einer erfindungsgemäßen Bremsanlage,
- Fig. 6: ein weiteres Ausführungsbeispiel einer erfindungsgemäßen Bremsanlage,
- Fig. 7: ein weiteres Ausführungsbeispiel einer erfindungsgemäßen Bremsanlage und
- Fig. 8: ein weiteres Ausführungsbeispiel einer erfindungsgemäßen Bremsanlage.

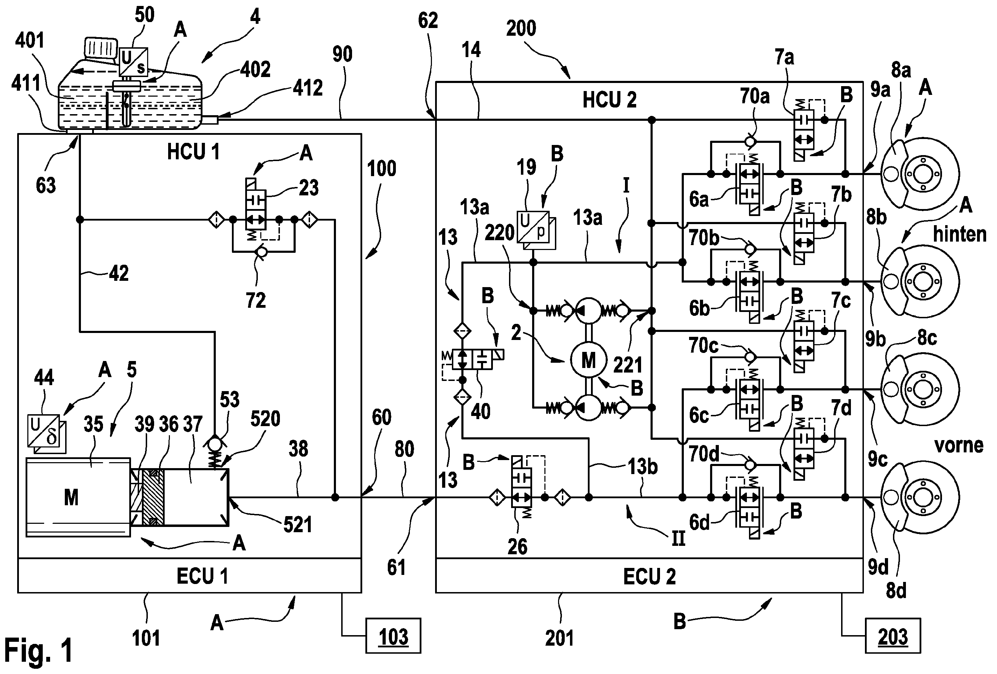

In Fig. 1 ist ein erstes Ausführungsbeispiel einer erfindungsgemäßen Bremsanlage für ein Kraftfahrzeug stark schematisch dargestellt. Beispielsgemäß ist die Bremsanlage zur Betätigung von vier hydraulisch betätigbaren Radbremsen 8a-8d ausgebildet, eine Erweiterung auf mehr Radbremsen sind einfach möglich. Beispielsgemäß sind die Radbremsen 8a, 8b der Hinterachse (rear) und die Radbremsen 8c, 8d der Vorderachse (front) des Fahrzeugs zugeordnet.

Die Bremsanlage umfasst eine erste elektrisch betätigbare Druckquelle 5, eine erste elektronische Steuervorrichtung 101 (ECU1), welche die erste Druckquelle 5 ansteuert, eine zweite elektrisch betätigbare Druckquelle 2, ein elektrisch betätigbares Einlassventil 6a-6d je Radbremse 8a-8d und ein elektrisch betätigbares Auslassventil 7a-7d je Radbremse 8a-8d, eine zweite elektronische Steuervorrichtung 201 (ECU2), welche die zweite Druckquelle 2 und die Einlass- und Auslassventile 6a-6d, 7a-7d ansteuert. Weiterhin umfasst die Bremsanlage einen Druckmittelvorratsbehälter 4. Die erste Druckquelle 5 sowie die zweite Druckquelle 2 sind mit einer Bremsversorgungsleitung 13 verbunden, an welche die vier Einlassventile 6a-6d angeschlossen sind. Ein elektrisch betätigbares Kreistrennventil 40 ist derart in der Bremsversorgungsleitung 13 angeordnet, dass bei geschlossenem Kreistrennventil 40 die Bremsversorgungsleitung 13 in einen ersten Leitungsabschnitt 13a und einen zweiten Leitungsabschnitt 13b hydraulisch getrennt wird. Dabei ist der erste Leitungsabschnitt 13a mit der zweiten Druckquelle 2 und zwei der vier Einlassventile 6a, 6b hydraulisch verbunden und der zweite Leitungsabschnitt 13b ist mit der ersten Druckquelle 5 und den anderen zwei der vier Einlassventilen 6c, 6d hydraulisch verbunden. Das Kreistrennventil 40 wird von der zweiten elektronischen Steuervorrichtung 201 angesteuert. Vorteilhafterweise ist das Kreistrennventil 40 stromlos offen ausgeführt.

Die erste Druckquelle 5 und die zweite Druckquelle 2 sind also druckseitig mit der Bremsversorgungsleitung 13 verbunden, an welche die vier Einlassventile 6a-6d angeschlossen sind. So können alle vier Radbremsen 8a-8d mittels der ersten Druckquelle 5 oder mittels der zweiten Druckquelle 2 betätigt werden.

Bei geschlossenem Kreistrennventil 40 ist die Bremsversorgungsleitung 13 in den ersten Leitungsabschnitt 13a, an welchen die Einlassventile 6a, 6b bzw. die Radbremsen 8a, 8b angeschlossen sind, und den zweiten Leitungsabschnitt 13b, an welchen die Einlassventile 6c, 6d bzw. die Radbremsen 8c, 8d angeschlossen sind, getrennt. Bei geschlossenen Kreistrennventil 40 ist die Bremsanlage somit in zwei hydraulische Bremskreise I und II getrennt oder aufgeteilt. Dabei ist im ersten Bremskreis I die Druckquelle 2 (über den ersten Leitungsabschnitt 13a) mit nur noch den Radbremsen 8a und 8b verbunden, und im zweiten Bremskreis II ist die erste Druckquelle 5 (über den zweiten Leitungsabschnitt 13b) mit nur noch den Radbremsen 8c und 8d verbunden. Das Kreistrennventil 40 ist vorteilhafterweise stromlos offen ausgeführt.

Die Bremsanlage umfasst beispielsgemäß eine erste Baueinheit 100, welche beispielsgemäß als ein erstes elektrohydraulisches Bremsensteuergerät (HECU1) mit einem Ventilblock HCU1 und der ersten elektronischen Steuervorrichtung 101 (ECU1) ausgeführt ist, eine zweite Baueinheit 200, welche beispielsgemäß als ein zweites elektrohydraulisches Bremsensteuergerät (HECU2) mit einem Ventilblock HCU2 und der zweiten elektronischen Steuervorrichtung 201 (ECU2) ausgeführt ist, und den Druckmittelvorratsbehälter 4.

Der unter Atmosphärendruck stehende Druckmittelvorratsbehälter 4 ist vorteilhafterweise an der ersten Baueinheit 100 angeordnet. Druckmittelvorratsbehälter 4 umfasst beispielsgemäß zwei Kammern, wobei der ersten Kammer 401 ein erster Behälteranschluss 411 zugeordnet ist und der zweiten Kammer 402 ein zweiter Behälteranschluss 412 zugeordnet ist.

In der ersten Baueinheit 100 ist die erste elektrisch betätigbare Druckquelle 5 angeordnet.

In der zweiten Baueinheit 200 sind die zweite elektrisch betätigbare Druckquelle 2 sowie die radindividuelle Bremsdruckmodulationsventile, d.h. Einlass- und Auslassventile 6a-6d, 7a-7d, angeordnet.

Die Bremsanlage umfasst, wie bereits erwähnt, je hydraulisch betätigbarer Radbremse 8a-8d ein Einlassventil 6a-6d und ein Auslassventil 7a-7d, die paarweise über Mittenanschlüsse hydraulisch zusammengeschaltet und jeweils mit einem hydraulischen Radanschluss 9a-9d verbunden sind, an welchen die entsprechende Radbremse 8a-8d angeschlossen ist. Den Einlassventilen 6a-6d ist jeweils ein zu der Bremsversorgungsleitung 13 hin öffnendes Rückschlagventil 70a-70d parallelgeschaltet. Die Ausgangsanschlüsse der Auslassventile 7a-7d sind über eine gemeinsame Rücklaufleitung 14 mit einem hydraulischen Anschluss 62 der zweiten Baueinheit 200 verbunden, welcher mit dem Druckmittelvorratsbehälter 4, beispielsgemäß mit dessen zweitem Behälteranschluss 412 bzw. mit dessen Kammer 402, verbunden ist. Die Eingangsanschlüsse aller Einlassventile 6a-6d können mittels der Bremsversorgungsleitung 13 (also bei offenem Kreistrennventil 40) mit einem Druck versorgt werden, der von der ersten Druckquelle 5 oder, z.B. bei Ausfall der ersten Druckquelle 5, von der zweiten Druckquelle 2 bereitgestellt wird.

Die zweite elektrisch steuerbare Druckquelle 2 umfasst einen Druckanschluss 220, welcher mit dem ersten Leitungsabschnitt 13a hydraulisch verbunden, und einen Sauganschluss 221, welcher mit dem Druckmittelvorratsbehälter 4, beispielsgemäß über Rücklaufleitung 14 und Anschluss 62, hydraulisch verbunden ist. Anschluss 62, und damit der Sauganschluss (die Saugseite(n)) 221 der Druckquelle 2, ist beispielsgemäß über eine Leitung oder einen Schlauch 90 mit dem Druckmittelvorratsbehälter 4 direkt verbunden. Diese Verbindung 90 trägt keinen Druck und kann deshalb einen großen Durchmesser haben. Beispielsgemäß ist Anschluss 62 mittels Verbindungsleitung/ Verbindungsschlauch 90 mit dem zweiten Behälteranschluss 412 (und damit der zweiten Kammer 402) des Druckmittelvorratsbehälters 4 hydraulisch verbunden.

Die erste elektrisch steuerbare Druckquelle 5 ist als eine hydraulische Zylinder-Kolben-Anordnung (bzw. ein einkreisiger elektrohydraulischer Aktuator (Linearaktuator)) ausgebildet, deren Kolben 36 von einem schematisch angedeuteten Elektromotor 35 unter Zwischenschaltung eines ebenfalls schematisch dargestellten Rotations-Translationsgetriebes 39 betätigbar ist, insbesondere vor- und zurückgefahren werden kann, um einen Druck in einem Druckraum 37 auf- und abzubauen. Der Kolben 36 begrenzt den Druckraum 37 der Druckquelle 5. Zur Ansteuerung des Elektromotors ist ein die Rotorlage des Elektromotors 35 erfassender, lediglich schematisch angedeuteter Rotorlagensensor 44 vorgesehen.

Die erste Druckquelle 5, bzw. deren Druckraum 37, ist über ein elektrisch betätigbares, vorteilhafterweise stromlos offenes, Trennventil 26 mit dem zweiten Leitungsabschnitt 13b bzw. der Bremsversorgungsleitung 13 trennbar verbunden. Trennventil 26 wird von der zweiten elektronischen Steuervorrichtung 201 angesteuert.

Beispielsgemäß ist der Druckraum 37 der ersten elektrisch steuerbaren Druckquelle 5 an einen Systemdruckleitungsabschnitt 38 angeschlossen, mittels welchem die Druckquelle 5 hydraulisch mit einem hydraulischen Anschluss 60 der ersten Baueinheit 100 verbunden ist, welcher über ein hydraulisches Verbindungselement 80 mit einem hydraulischen (Druck)Anschluss 61 der zweiten Baueinheit 200 hydraulisch verbunden ist. Trennventil 26 ist hydraulisch zwischen dem Anschluss 61 und dem zweiten Leitungsabschnitt 13b der Bremsversorgungsleitung 13 angeordnet. Trennventil 26 ist vorteilhafterweise in der zweiten Baueinheit 200 angeordnet.

Verbindung 80 stellt die einzige hydraulische Druckverbindung, insbesondere die einzige hydraulische Verbindung, zwischen der ersten Baueinheit 100 und der zweiten Baueinheit 200 dar. Es handelt sich dabei um eine hydraulische Verbindung zur Übertragung eines Bremsdrucks zur Betätigung der Radbremsen 8a-8d (daher Druckverbindung). Verbindungselement 80 muss daher druckfest ausgeführt sein, z.B. als ein druckfester Bremsschlauch.

Die erste Druckquelle 5 ist über ein in Richtung der ersten Druckquelle 5 öffnendes Rückschlagventil 53 mit dem Druckmittelvorratsbehälter 4 verbunden.

Beispielsgemäß ist Druckraum 37 unabhängig vom Betätigungszustand des Kolbens 36, über eine (in der ersten Baueinheit 100 ausgebildete) (Nachsaug)Leitung 42 mit einem hydraulischen Anschluss 63 der ersten Baueinheit 100 hydraulisch verbunden. Anschluss 63 ist hydraulisch mit dem Druckmittelvorratsbehälter 4, beispielsgemäß mit dessen ersten Behälteranschluss 411 und damit dessen erster Kammer 401, verbunden. In der (Nachsaug)Leitung 42 ist das in Richtung des Druckmittelvorratsbehälters 4 schließende Rückschlagventil 53 angeordnet. Die beispielsgemäße Druckquelle / Zylinder-Kolben-Anordnung 5 weist beispielsgemäß keine Schnüffellöcher auf.

Weiterhin ist die erste Druckquelle 5 über ein elektrisch betätigbares, vorteilhafterweise stromlos offen ausgeführtes, zweites Trennventil 23 mit dem Druckmittelvorratsbehälter 4 verbunden. Das zweite Trennventil 23 wird von der ersten elektronischen Steuervorrichtung 101 angesteuert.

Beispielsgemäß ist Druckraum 37 über den Leitungsabschnitt 38 und das elektrisch betätigbare zweite Trennventil 23 mit dem hydraulischen Anschluss 63 (sowie der (Nachsaug)Leitung 42) hydraulisch verbunden. Dem zweite Trennventil 23 ist beispielsgemäß ein in Richtung des Druckraums 37 öffnendes Rückschlagventil 72 parallelgeschaltet.

Neben dem (Druckmittelvorratsbehälter-)Anschluss 63 und dem (Druck)Anschluss 60 umfasst die erste Baueinheit 100 beispielsgemäß keinen weiteren hydraulischen Anschluss.

Die zweite elektrisch steuerbare Druckquelle 2 ist beispielsgemäß als eine Zwei-Kolben-Pumpe ausgeführt, deren zwei Druckseiten zusammengeschaltet sind (zum Druckanschluss 220) und deren zwei Saugseiten zusammengeschaltet sind (zum Sauganschluss 221). Sauganschluss 221 (und damit die beiden Saugseiten) der Druckquelle 2 ist hydraulisch mit der Rücklaufleitung 14 und somit dem Druckmittelvorratsbehälter 4 bzw. dem Anschluss 62 verbunden. Druckanschluss 220 (und damit die beiden Druckseiten) der Druckquelle 2 sind mit dem ersten Leitungsabschnitt 13a der Bremsversorgungsleitung 13 verbunden.

Die Bremsanlage umfasst beispielsgemäß im Bremskreis I (Leitungsabschnitt 13a) einen Drucksensor 19, welcher somit der zweiten Druckquelle 2 zugeordnet ist. Dies ist vorteilhaft für den Berstschutz bei aktiver Kreistrennung, also wenn das Kreistrennventil 40 geschlossen ist. Drucksensor 19 kann aber auch im Bremskreis II angeordnet sein oder es kann ein zweiter Drucksensor vorgesehen sein, so dass jeder der beiden Bremskreis I und II mittels eines Drucksensors direkt überwacht werden kann.

Beispielsgemäß umfasst die Bremsanlage zur Leckageüberwachung eine Pegelmesseinrichtung 50 zur Bestimmung eines Druckmittel-Pegels in dem Druckmittelvorratsbehälter 4.

Beispielsgemäß sind die Komponenten 5, 53, 23, 72 sowie die Leitungsabschnitte 38, 42 in dem ersten Ventilblock HCU1 angeordnet und die Komponenten 2, 6a-6d, 7a-7d, 26, 19 sowie die Leitungsabschnitte 13a, 13b (und die Leitungsabschnitte zwischen den Einlass- und Auslassventilen einerseits und den Radanschlüssen andererseits) in dem zweiten Ventilblock HCU2 angeordnet.

Wie bereits erwähnt, ist jedem Ventilblock HCU1, HCU2 eine der elektronischen Steuervorrichtungen 101, 201 (ECU1, ECU2) zugeordnet. Jede elektronische Steuervorrichtung 101, 201 umfasst elektrische und/oder elektronische Elemente (z.B. Mikrocontroller, Leistungsteile, Ventiltreiber, sonstigen elektronische Bauteile, etc.) zur Ansteuerung der elektrisch betätigbaren Komponenten des zugehörigen Ventilblocks (Baueinheit) und ggf. zur Auswertung der Signale der diesem Ventilblock (Baueinheit) zugeordneten Sensoren. Ventilblock und elektronische Steuervorrichtung sind vorteilhafterweise in bekannterweise als eine elektrohydraulische Einheit (HECU) ausgeführt.

Zur elektrischen Anbindung, Verbindung und Versorgung der einzelnen elektrischen bzw. elektrisch betätigbaren, ansteuerbaren, auswertbaren o.ä. Komponenten der Bremsanlage sind eine erste elektrische Partition A und eine zweite elektrische Partition B vorgesehen, welche elektrisch unabhängig voneinander sind.

In den Figuren sind diejenigen elektrischen Komponenten, welche der ersten elektrischen Partition A zugeordnet sind bzw. dieser angehören, durch einen Pfeil mit A gekennzeichnet, während diejenigen elektrischen Komponenten, welche der zweiten elektrischen Partition B zugeordnet sind bzw. dieser angehören, durch einen Pfeil mit B gekennzeichnet sind.

Die elektronische Steuervorrichtung 101 ist der ersten elektrischen Partition A zugeordnet bzw. gehört dieser an, während die zweite elektronische Steuervorrichtung 201 der zweiten elektrischen Partition B zugeordnet ist bzw. angehört. Entsprechend sind die elektronische Steuervorrichtung 101 und die zweite elektronische Steuervorrichtung 201 elektrisch unabhängig.

Zur Versorgung der Bremsanlage mit elektrischer Energie sind eine erste elektrische Energiequelle 103, z.B. ein Bordnetz, und eine von der ersten Energiequelle unabhängige, zweite elektrische Energiequelle 203, z.B. ein Bordnetz, vorgesehen. Die erste elektrische Energiequelle 103 versorgt die erste elektrische Partition A mit Energie und die zweite elektrische Energiequelle 203 versorgt die zweite elektrische Partition B.

Die erste elektronische Steuervorrichtung 101 steuert die erste Druckquelle 5 an. Entsprechend ist die erste Druckquelle 5 der ersten elektrischen Partition A zugeordnet bzw. zugehörig. Beispielsgemäß wird die erste Druckquelle 5 über die erste elektronische Steuervorrichtung 101 mit Energie (von der ersten elektrischen Energiequelle 103) versorgt.

Die zweite elektronische Steuervorrichtung 201 steuert die zweite Druckquelle 2 an. Entsprechend ist die zweite Druckquelle 2 der zweiten elektrischen Partition B zugeordnet bzw. zugehörig. Beispielsgemäß wird die zweite Druckquelle 2 über die zweite elektronische Steuervorrichtung 201 mit Energie (von der zweiten elektrischen Energiequelle 203) versorgt.

Beispielsgemäß lässt sich bzw. wird die erste Druckquelle 5 ausschließlich durch die erste elektronische Steuervorrichtung 101 und die zweite Druckquelle 2 ausschließlich durch die zweite elektronische Steuervorrichtung 201 ansteuern bzw. angesteuert. Grundsätzlich wäre es denkbar den Elektromotor einer Druckquelle z.B. mit zwei elektrisch unabhängigen Motorwicklungen auszustatten, so könnte die Druckquelle von den zwei unabhängigen elektrischen Einrichtungen angesteuert werden. Dies wäre jedoch mit weiteren Redundanzen, z.B. zweifachen Verbindungsleitungen etc., verbunden und daher kostenintensiver.

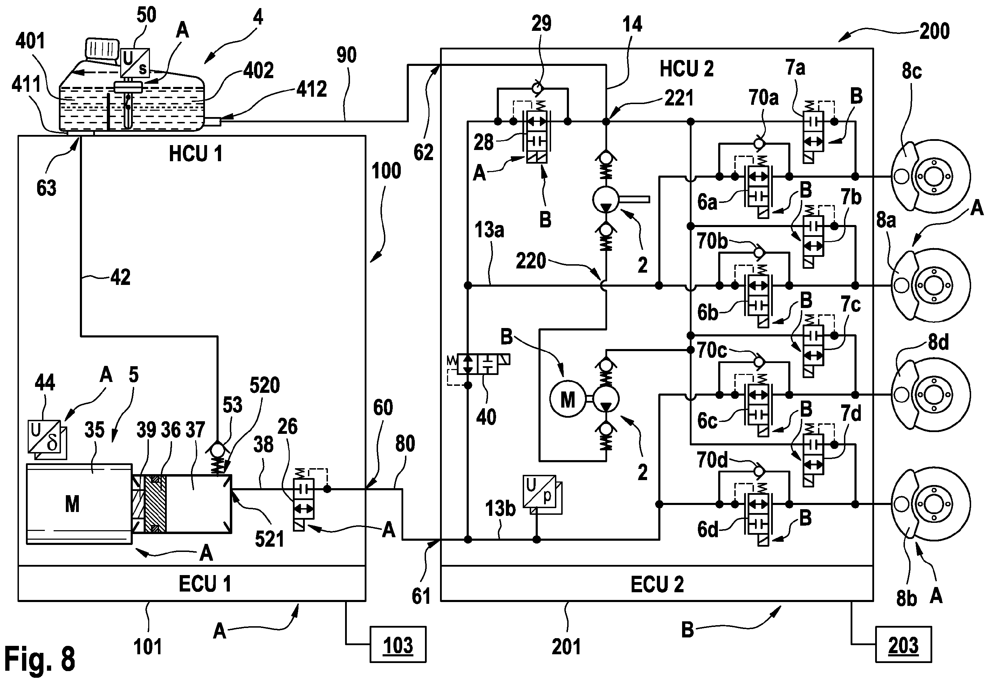

Die übrigen Komponenten der Bremsanlage sind in vorteilhafterweise entweder der ersten elektronischen Steuervorrichtung 101 (Partition A) oder der zweiten elektronischen Steuervorrichtung 201 (Partition B) zugeordnet. D.h. sie werden durch diese Steuervorrichtung angesteuert bzw. betätigt und/oder mit elektrischer Energie versorgt und/oder sind Signalseitig mit dieser Steuervorrichtung verbunden und/oder werden durch diese Steuervorrichtung ausgewertet. Um weitere Redundanzen zu vermeiden, ist vorteilhafterweise eine Komponente lediglich bzw. ausschließlich von einer der beiden elektronischen Steuervorrichtungen 101, 201, nicht aber von der anderen elektronischen Steuervorrichtung, ansteuerbar bzw. betätigbar oder mit elektrischer Energie versorgbar oder signalseitig verbunden oder auswertbar (Ausnahme siehe Ausführungsbeispiel der Fig. 8 mit einem doppelt ansteuerbaren Ventil 28).

Die Einlass- und Auslassventile 6a-6d, 7a-7d sind der zweiten elektrischen Partition B zugeordnet und werden von der zweiten elektronischen Steuervorrichtung 201 angesteuert. Ebenso ist das Kreistrennventil 40 der zweiten elektrischen Partition B zugeordnet und wird von der zweiten elektronischen Steuervorrichtung 201 angesteuert.

Auch das Trennventil 26 zur Trennung von erster Druckquelle 5 und Bremsversorgungsleitung 13 ist beispielsgemäß der zweiten elektrischen Partition B zugeordnet und wird von der zweiten elektronischen Steuervorrichtung 201 angesteuert.

Drucksensor 19 ist ebenso der zweiten elektrischen Partition B zugeordnet. Seine Signale werden der zweiten elektronischen Steuervorrichtung 201 zugeleitet und von dieser ausgewertet und verarbeitet.

Das Trennventil 23 ist der ersten elektrischen Partition A zugeordnet und wird von der ersten elektronischen Steuervorrichtung 101 angesteuert.

Weiterhin werden der ersten elektronischen Steuervorrichtung 101 die Signale der Pegelmesseinrichtung 50 zugeleitet und von dieser ausgewertet und verarbeitet.

Bevorzugt umfasst die Bremsanlage elektrisch betätigbare Parkbremsen an den Hinterrädern (rear). Diese werden vorteilhafterweise von der ersten elektronischen Steuervorrichtung 101 angesteuert und betätigt, gekennzeichnet durch A an den Radbremsen 8a, 8b in Fig. 1.

Die beispielsgemäße Bremsanlage weist eine primäre Druckquelle 5 und eine sekundäre Druckquelle 2 auf, die von jeweils einer ECU (Electronic Control Unit) elektrisch betrieben werden und einen Sauganschluss und einen Druckanschluss haben. In den Druckanschluss 220 der Sekundärdruckquelle 2 kann auch im stromlosen Zustand keine Bremsflüssigkeit einströmen. Bevorzugt ist die primäre Druckquelle 5 ein Linearaktuator mit Nachsaug-Rückschlagventil 53 und die sekundäre Druckquelle 2 eine Kolbenpumpe. Bevorzugt kann die sekundäre Druckquelle 2 einen höheren Druck als die primäre Druckquelle 5 erzeugen.

Die Sauganschlüsse 221 bzw. 520 der beiden Druckquellen 2 bzw. 5 sind mit einem Druckmittelvorratsbehälter 4 verbunden, bevorzugt jeweils mit einer von zwei getrennten Kammern (402, 401).

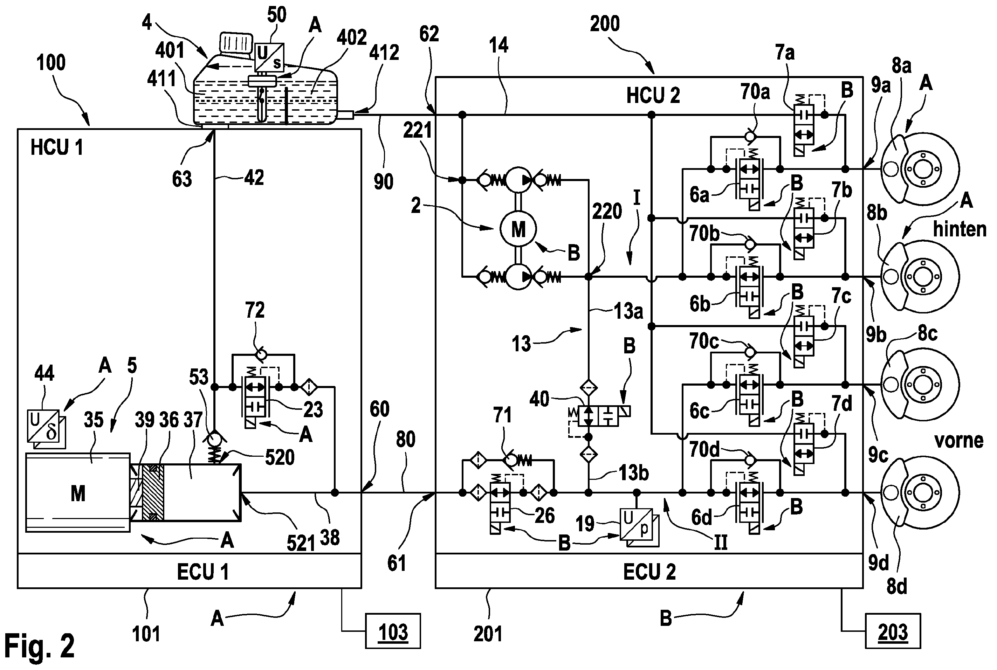

Der Druckanschluss 521 der primären Druckquelle 5 ist über das elektromagnetische Ventil 26, auch Druckzuschaltventil genannt, mit einem primären Kreisknoten (zweiter Leitungsabschnitt 13b) verbunden. Dem Ventil 26 kann ein Rückschlagventil 71 parallelgeschaltet sein (siehe z.B. Fig. 2), das einen Volumenstrom von der Primärdruckquelle 5 zum Primärkreisknoten (13b) zulässt.

Der Druckanschluss 220 der sekundären Druckquelle 2 ist direkt (ohne Zwischenschaltung eines Ventils) mit einem sekundären Kreisknoten (ersten Leitungsabschnitt 13a) verbunden.

Die beiden Kreisknoten (Leitungsabschnitte 13a, 13b) sind über ein elektromagnetisches Ventil 40, auch Kreistrennventil genannt, miteinander verbunden.

Die beiden Kreisknoten sind über elektromagnetische Einlassventile 6a-6d mit Radbremsen 8a-8d verbunden, beispielsgemäß der Primärkreisknoten (13b) mit den Radbremsen 8c, 8d der Vorderachse und der Sekundärkreisknoten (13a) mit den Radbremsen 8a, 8b der Hinterachse.

Die Radbremsen 8a-8d sind über elektromagnetische Auslassventile 7a-7d mit dem Druckmittelvorratsbehälter 4 verbunden.

Der Ausgangsanschluss 521 der primären Druckquelle 5 ist über ein elektromagnetisches Ventil 23, auch Druckabbauventil genannt, mit dem Druckmittelvorratsbehälter 4 verbunden.

Bevorzugt sind Ventil 26, Ventil 40 und Ventil 23 stromlos offen ausgeführt.

Im Normalbremsbetrieb wird der Druck in den Radbremsen 8a-8d von der Primärdruckquelle 5 bei geschlossenem Trennventil 23 aufgebaut. Abgebaut wird der Druck in die Primärdruckquelle 5 (Zurückfahren des Kolbens 36) oder über das Trennventil 23 in den Druckmittelvorratsbehälter 4.

Von den Einlass- und Auslassventilen 6a-6d, 7a-7d wird der Radbremsdruck bei Bedarf radindividuell moduliert (z.B. bei einer Antiblockierregelung oder sonstigen Bremsregelfunktion). Gegebenenfalls wird das Trennventil 26 geschlossen, damit die Primärdruckquelle 5 zusätzliches Volumen aus dem Druckmittelvorratsbehälter 4 nachsaugen kann.

Wenn ein besonders hoher Volumenstrom benötigt bzw. angefordert wird, arbeiten beide Druckquellen 5 und 2 bevorzugt gleichzeitig parallel. In diesem Fall geschieht der Druckabbau zumindest teilweise über das Trennventil 23, das bevorzugt als Analogventil ausgeführt ist, also seinen Durchfluss steuern kann. Wenn ein besonders hoher Druck angefordert wird, wird bevorzugt das Trennventil 26 geschlossen und die Sekundärdruckquelle 2 erhöht den Druck über den Druck der Primärdruckquelle 5 hinaus.

Außerhalb von Bremsungen ist der atmosphärische Druckausgleich über Trennventil 23 und Trennventil 26 permanent gewährleistet.

Bei einer Leckage in der Bremsanlage wird bevorzugt das Kreistrennventil 40 geschlossen und das System dadurch in zwei unabhängige Bremskreise I und II aufgeteilt.

Bevorzugt wird das Trennventil 23 von der primären ECU 101 angesteuert. Bevorzugt wird das Trennventil 26 von der sekundären ECU 201 angesteuert. Auf diese Ventilzuordnung bezieht sich die folgende Beschreibung des Betriebs im Fehlerfall.

Wenn das Primärsystem (Baueinheit 100) elektrisch ausfällt, insbesondere die primäre ECU 101 oder ihre Spannungsversorgung 103 (Ausfall der Partition A), schließt die sekundäre ECU 201 das Trennventil 26, um über die Sekundärdruckquelle 2 Druck aufzubauen. Abgebaut wird Druck über das Trennventil 26 oder über die Auslassventile 7a-7d. Bevorzugt werden die Ein- und Auslassventile von der sekundären ECU 201 (Partition B) angesteuert, so dass der Druck radindividuell moduliert werden kann.

Wenn das Sekundärsystem (Baueinheit 200) elektrisch ausfällt, insbesondere die sekundäre ECU 201 oder ihre Spannungsversorgung 203 (Ausfall der Partition B), wird der Druck wie im Normalbetrieb über die primäre Druckquelle 5 und gegebenenfalls das Trennventil 23 auf- und abgebaut. Auf eine radindividuelle Druckregelung muss verzichtet werden, aber eine gemeinsame Modulation der Raddrücke bleibt möglich, um zu verhindern, dass das Fahrzeug durch blockierende Räder destabilisiert wird.

Bevorzugt ist die Zuordnung der Ventile zu den beiden ECUs wie oben beschrieben, das Kreistrennventil 40 wird von der sekundären ECU 201 angesteuert, und das System ist in zwei Baueinheiten 100 und 200 mit zwei hydraulischen Verbindungsleitungen, nämlich das druckfeste Verbindungselement 80 und die drucklose bzw. nicht-druckfeste Verbindungsleitung 90, aufgeteilt. Diese beiden Baueinheiten 100, 200 umfassen bevorzugt jeweils eine der beiden ECUs, die zugeordnete Druckquelle und die zugeordneten Ventile.

In Fig. 2 ist ein zweites Ausführungsbeispiel einer erfindungsgemäßen Bremsanlage schematisch dargestellt. Im Unterschied zum ersten Ausführungsbeispiel der Fig. 1 ist dem Trennventil 26 der zweiten Baueinheit 200 ein Rückschlagventil 71 parallelgeschaltet, das einen Volumenstrom von der Primärdruckquelle 5 zum Leitungsabschnitt 13b zulässt, um den hydraulischen Widerstand des Ventils 26 in Druckaufbaurichtung zu verringern. Weiterhin ist der Drucksensor 19 an dem Leitungsabschnitt 13b (Bremskreis II) angeordnet.

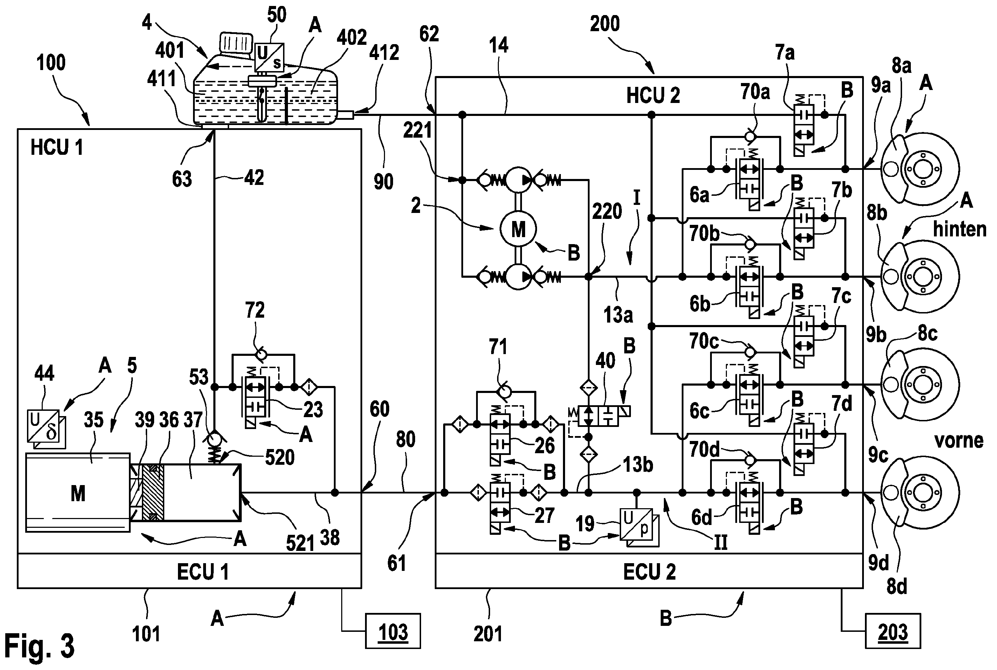

In Fig. 3 ist ein drittes Ausführungsbeispiel einer erfindungsgemäßen Bremsanlage schematisch dargestellt. Im Unterschied zum zweiten Ausführungsbeispiel der Fig. 2 ist (in der zweiten Baueinheit 200) ein weiteres elektrisch betätigbares Ventil 27 vorgesehen, welches stromlos geschlossen ausgeführt ist. Dieses ist dem Trennventil 26 parallelgeschaltet. Ventil 27 wird von der zweiten elektronischen Steuervorrichtung 201 angesteuert.

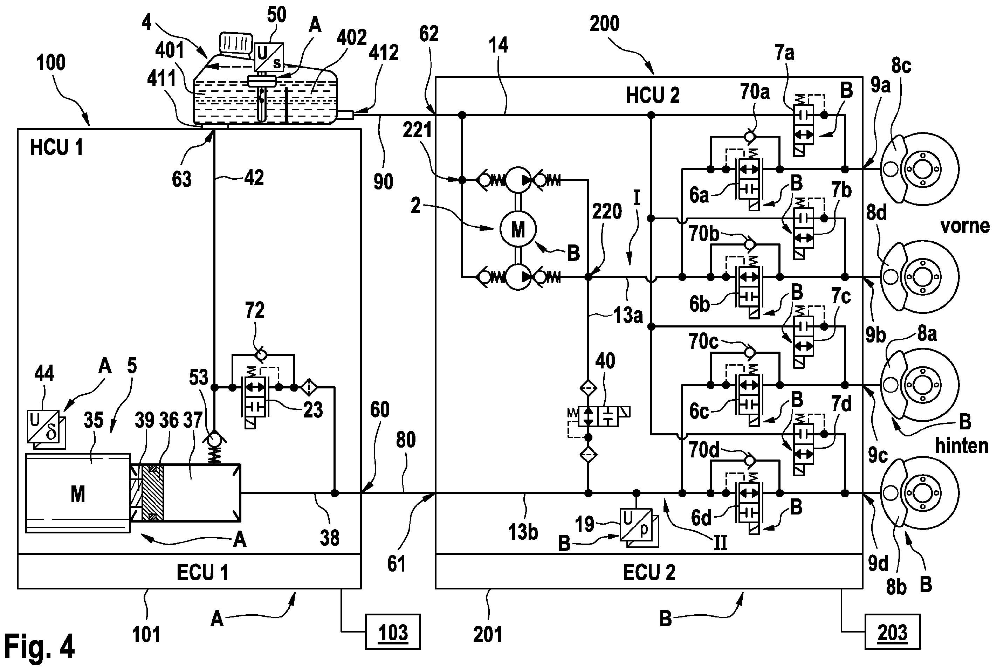

In Fig. 4 ist ein viertes Ausführungsbeispiel einer erfindungsgemäßen Bremsanlage schematisch dargestellt. Im Unterschied zu der Bremsanlage der Fig. 1 ist das Trennventil 26 entfallen. Die Druckquelle 5 ist direkt mit dem ersten Leitungsabschnitt 13a verbunden.

Die Einsparung des Trennventils 26 führt allerdings zu mehreren Nachteilen. Falls die erste Baueinheit 100 ausfällt (z.B. durch einen elektrischen Fehler in der ECU1 oder Partition A, oder durch eine Leckage in Baueinheit 100), kann die Druckquelle 2 Druck nur noch im ersten Leitungsabschnitt 13a aufbauen (bei geschlossenem Kreistrennventil 40). Die Druckquelle 5 kann nur noch nachsaugen, wenn im zweiten Leitungsabschnitt 13b Einlassventile 6c, 6d ohne Rückschlagventil 70c, 70d (nicht dargestellt) verwendet werden.

Vorteilhafterweise sind daher die Fahrzeugachsen in diesem Ausführungsbeispiel vertauscht, d.h. der zweite Leitungsabschnitt 13b ist mit den Radbremsen 8a, 8b der Hinterachse (rear) verbunden und der erste Leitungsabschnitt 13a, der mit Druckquelle 2 verbunden ist, ist mit den Radbremsen 8c, 8d der Vorderachse verbunden.

Die elektrisch betätigbaren Parkbremsen an den Hinterrädern (rear) werden vorteilhafterweise von der zweiten elektronischen Steuervorrichtung 201 angesteuert und betätigt (gekennzeichnet durch B an den Radbremsen 8a, 8b in Fig. 4).

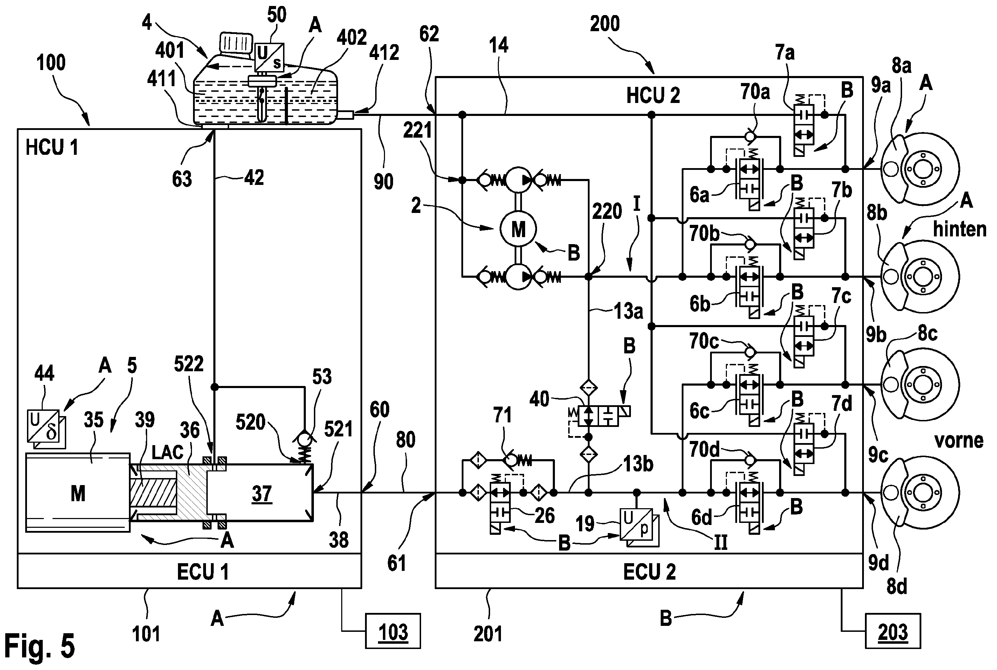

In Fig. 5 ist ein fünftes Ausführungsbeispiel einer erfindungsgemäßen Bremsanlage schematisch dargestellt. Im Unterschied zu der Bremsanlage der Fig. 2 ist das Trennventil 23 inkl. Rückschlagventil 72 entfallen. Es ist also die hydraulische Verbindung mit Ventil 23, 72 zwischen Leitungsabschnitt 38 und 42 entfallen. Dafür umfasst die Druckquelle 5 zusätzlich einen Mechanismus zur atmosphärischen Anbindung. Beispielsgemäß ist die Zylinder-Kolben-Anordnung 5 (Linearaktuator) mit einem Schnüffelloch 522 ausgeführt.

Eine entsprechende Ausführung (Entfall Ventile 23, 72 und Ausführung der Druckquelle 5 mit Schnüffelloch 522) ist auch in den Bremsanlagen der Ausführungsbeispiele der Fig. 1, 3, 4 möglich.

Die Einsparung des Trennventils 23 führt also zu einem zusätzlichen Aufwand in der Druckquelle 5. Die oben beschriebene Funktion des Trennventils 23, von der Druckquelle 2 bereitgestelltes Zusatzvolumen wieder abzubauen, muss von den Auslassventilen 7a-7d übernommen werden, was weniger komfortabel ist.

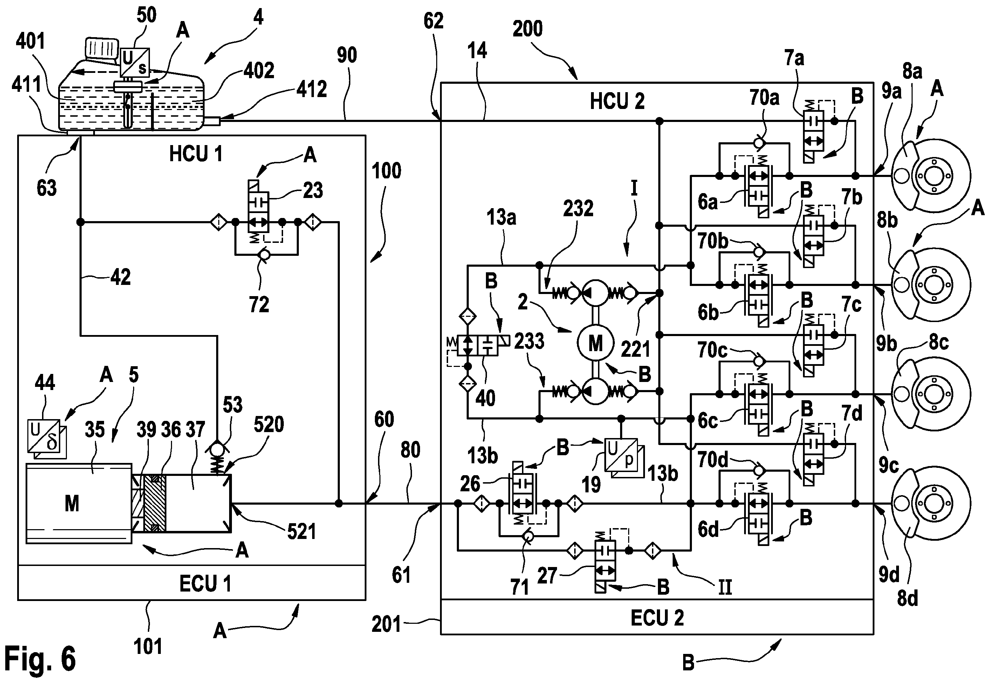

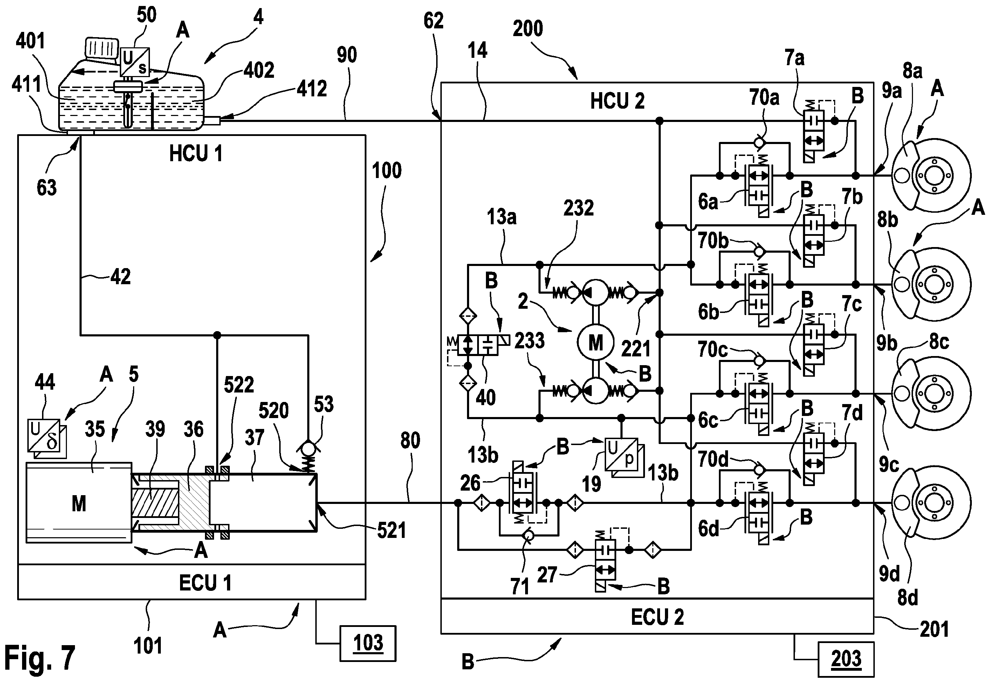

Gemäß weiterer bevorzugter Ausführungsbeispiele der erfindungsgemäßen Bremsanlage (siehe z.B. Fig. 6 und 7) ist die zweite Druckquelle 2 zweikreisig ausgeführt, insbesondere als eine Zwei-Kolben-Pumpe. Dabei bleiben die beiden Saugseiten verbunden (Sauganschluss 221) und sind mit der Rücklaufleitung 14 verbunden. Die zwei Druckseiten sind nicht zusammengeschaltet. Eine der Druckseiten (Druckanschluss 232) ist mit dem ersten Leitungsabschnitt 13a verbunden, die andere Druckseite (Druckanschluss 233) ist mit dem zweiten Leitungsabschnitt 13b verbunden. Diese Ausführung der Druckquelle 2 ist in allen bisher beschriebenen Ausführungsbeispielen möglich. Diese Ausführung hat den Vorteil, dass auch nach Ausfall der ersten Partition A (z.B. der ersten elektronischen Steuervorrichtung 101) ein zweikreisiger Betrieb möglich ist, d.h. dass beide Leitungsabschnitte 13a und 13b mittels der Druckquelle 2 mit Druck beaufschlagt werden können. Ein Nachteil ist die verminderte Druckaufbaudynamik im Leitungsabschnitt 13a bei zweikreisigem Betrieb. Beispielhaft sind in Fig. 6 und 7 entsprechende Ausführungsbeispiele ausgehend von den Bremsanlagen der Fig. 3 und 5 dargestellt.

In Fig. 8 ist ein weiteres Ausführungsbeispiel einer erfindungsgemäßen Bremsanlage dargestellt. Die Unterschiede zum ersten Ausführungsbeispiel der Fig. 1 werden im Folgenden beschrieben.

Die erste Baueinheit 100 (bzw. Ventilblock HCU1) umfasst neben der ersten Druckquelle 5 und deren (Nachsaug)Leitung 42 mit dem Rückschlagventil 53 ein stromlos geschlossen ausgeführtes Trennventil 26, welches von der ersten elektronischen Steuervorrichtung 101 angesteuert wird. Die hydraulische Verbindung mit den Ventilen 23, 72 zwischen Leitungsabschnitt 38 und 42 entfallen, die Druckquelle 5 umfasst keine Schnüffellöcher. Trennventil 26 ist hydraulisch zwischen der Druckquelle 5 und dem Leitungsabschnitt 13b der Bremsversorgungsleitung 13, nämlich zwischen der Druckquelle 5 und dem Anschluss 60 der ersten Baueinheit 100, angeordnet.

Die zweite Baueinheit 200 (bzw. Ventilblock HCU2) umfasst neben der zweiten Druckquelle 2 und den Einlass- und Auslassventilen 6a-6d, 7a-7d und dem Kreistrennventil 40, welche von der zweiten elektronischen Steuervorrichtung 201 angesteuert werden, ein stromlos offen ausgeführtes Trennventil 28, welches der Druckquelle 2 parallelgeschaltet ist, also die Saugseiten der Druckquelle 2 mit den Druckseiten der Druckquelle 2 verbindet bzw. die Rücklaufleitung 14 mit dem Leitungsabschnitt 13a verbindet. Trennventil 28 ist ein in Richtung des Druckmittelvorratsbehälters 4 (der Rücklaufleitung 14) schließendes Rückschlagventil 29 parallelgeschaltet. Trennventil 28 ist bevorzugt als Analogventil ausgeführt. Trennventil 28 ist doppelt ansteuerbar ausgeführt, d.h. es umfasst zwei getrennte, elektrisch unabhängige Betätigungsspulen, wobei die eine Spule von der ersten elektronischen Steuervorrichtung 101 angesteuert wird (Partition A) und die andere Spule von der zweiten elektronischen Steuervorrichtung 201 angesteuert wird (Partition B).

Die Wahl und Anordnung der elektrisch betätigbaren Ventile, die elektronische Partitionierung und insbesondere die Zuordnung zwischen elektrisch betätigbaren Ventilen und elektronischen Steuervorrichtungen ermöglichen eine hohe Verfügbarkeit der Bremsanlage bei gleichzeitig vorteilhafter Anordnung der Komponenten der Bremsanlage in zwei elektrohydraulischen Bremsensteuergeräten HECU1 und HECU2. Es wird ermöglicht, dass die beiden Bremsensteuergeräte HECU1 und HECU2 neben den drucklosen bzw. nicht-druckfesten Verbindungen zum Druckmittelvorratsbehälter nur eine druckfeste Verbindung, die sie hydraulisch untereinander verbindet, benötigen. Die mindestens vier Verbindungen zwischen der zweiten Baueinheit 200 (bzw. den Radanschlüsse (9a-9d)) und den Radbremsen 8a-8d sind ebenfalls druckfeste Verbindungen.

Die Aufteilung in zwei Bremsensteuergeräte HECU1, HECU2 bietet gegenüber einer Realisierung in nur einem Bremsensteuergerät den Vorteil, dass beide Bremsensteuergeräte jeweils kleiner und leichter und deshalb einfacher zu handhaben sind. Sie können auch einfacher auf vorhandenen Produktionsanlagen hergestellt werden. Bei einer Aufteilung in zwei Bremsensteuergeräte führt jede hydraulische Verbindung zwischen diesen Bremsensteuergeräten zu Mehraufwand und zusätzlichen Kosten. Es ist daher vorteilhaft, die Anzahl der hydraulischen Verbindungen möglichst klein zu halten. Außerdem ist es vorteilhaft, die verschiedenen Funktionen von hydraulischen Verbindungen möglichst klar zu trennen. Verbindungen, über die Druckmittel angesaugt wird, sollen einen möglichst kleinen hydraulischen Widerstand und deshalb einen möglichst großen Durchmesser haben. Dafür ist es vorteilhaft, wenn erreicht wird, dass solche Verbindungen nicht druckfest sein müssen. Umgekehrt sollten drucktragende Verbindungen keine Ansaugfunktion haben.

## Patentansprüche

1. Bremsanlage für ein Kraftfahrzeug für zumindest vier hydraulisch betätigbare Radbremsen (8a-8d) umfassend eine erste elektrisch betätigbare Druckquelle (5), eine erste elektronische Steuervorrichtung (101), eine zweite elektrisch betätigbare Druckquelle (2), ein elektrisch betätigbares Einlassventil (6a-6d) je Radbremse und ein elektrisch betätigbares Auslassventil (7a-7d) je Radbremse, eine zweite elektronische Steuervorrichtung (201) und einen Druckmittelvorratsbehälter (4), wobei die erste Druckquelle (5) sowie die zweite Druckquelle (2) mit einer Bremsversorgungsleitung (13) verbunden sind, an welche die zumindest vier Einlassventile (6a-6d) angeschlossen sind, wobei ein elektrisch betätigbares Kreistrennventil (40) in der Bremsversorgungsleitung (13) derart angeordnet ist, dass bei geschlossenem Kreistrennventil (40) die Bremsversorgungsleitung (13) in einen ersten Leitungsabschnitt (13a) und einen zweiten Leitungsabschnitt (13b) hydraulisch getrennt wird, wobei der erste Leitungsabschnitt (13a) mit der zweiten Druckquelle (2) und zumindest zwei der zumindest vier Einlassventile (6a, 6b) hydraulisch verbunden ist und der zweite Leitungsabschnitt (13b) mit der ersten Druckquelle (5) und den anderen, insbesondere zumindest zwei, der zumindest vier Einlassventilen (6c, 6d) hydraulisch verbunden ist, wobei die erste elektronische Steuervorrichtung (101) die erste Druckquelle (5) ansteuert, die zweite elektronische Steuervorrichtung (201) die zweite Druckquelle (2) und die Einlass- und Auslassventile (6a-6d, 7a-7d) ansteuert, und das Kreistrennventil (40) von der zweiten elektronischen Steuervorrichtung (201) angesteuert wird, **gekennzeichnet durch** eine erste Baueinheit (100), in welcher die erste elektrisch betätigbare Druckquelle (5) angeordnet ist und welche die erste elektronische Steuervorrichtung (101) umfasst, und eine zweite Baueinheit (200), in welcher die zweite elektrisch betätigbare Druckquelle (2), die elektrisch betätigbaren Einlass- und Auslassventile (6a-6d, 7a-7d) und das Kreistrennventil (40) angeordnet sind und welche die zweite elektronische Steuervorrichtung (201) umfasst.

2. Bremsanlage nach Anspruch 1, **dadurch gekennzeichnet, dass** eine erste elektrische Partition (A) und eine zweite elektrische Partition (B) vorgesehen sind, welche elektrisch unabhängig voneinander sind, wobei die erste Druckquelle (5) und die erste elektronische Steuervorrichtung (101) der ersten elektrischen Partition (A) zugeordnet sind und die zweite Druckquelle (2), die zweite elektronische Steuervorrichtung (201), die Einlass- und Auslassventile (6a-6d, 7a-7d) und das Kreistrennventil (40) der zweiten elektrischen Partition (B) zugeordnet sind.

3. Bremsanlage nach Anspruch 1 oder 2, **dadurch gekennzeichnet, dass** die erste Druckquelle (5) ausschließlich von der ersten elektronischen Steuervorrichtung (101) angesteuert wird und die zweite Druckquelle (2), die Einlass- und Auslassventile (6a-6d, 7a-7d) und das Kreistrennventil (40) ausschließlich von der zweiten elektronischen Steuervorrichtung (201) angesteuert werden.

4. Bremsanlage nach Anspruch 3, **dadurch gekennzeichnet, dass** die erste Baueinheit (100) und die zweite Baueinheit (200) durch höchstens ein druckfestes hydraulisches Verbindungselement (80) miteinander verbunden sind.

5. Bremsanlage nach Anspruch 3 oder 4, **dadurch gekennzeichnet, dass** die erste Baueinheit (100) und die zweite Baueinheit (200) durch lediglich ein hydraulisches Verbindungselement (80) miteinander verbunden sind, wobei dieses Verbindungselement druckfest ausgeführt ist.

6. Bremsanlage nach einem der vorhergehenden Ansprüche, **dadurch gekennzeichnet, dass** die erste Druckquelle (5) über ein elektrisch betätigbares, erstes Trennventil (26) mit der Bremsversorgungsleitung (13) verbunden ist, wobei das Trennventil (26) von der zweiten elektronischen Steuervorrichtung (201) angesteuert wird.

7. Bremsanlage nach Anspruch 6, **dadurch gekennzeichnet, dass** das erste Trennventil (26) stromlos offen ausgeführt ist.

8. Bremsanlage nach einem der vorhergehenden Ansprüche, **dadurch gekennzeichnet, dass** die erste Druckquelle (5) über ein elektrisch betätigbares, zweites Trennventil (23) mit dem Druckmittelvorratsbehälter (4) verbunden ist, wobei das zweite Trennventil (23) von der ersten elektronischen Steuervorrichtung (101) angesteuert wird.

9. Bremsanlage nach Anspruch 8, **dadurch gekennzeichnet, dass** das zweite Trennventil (23) stromlos offen ausgeführt ist.

10. Bremsanlage nach einem der vorhergehenden Ansprüche, **dadurch gekennzeichnet, dass** die erste Druckquelle (5) über ein in Richtung der ersten Druckquelle (5) öffnendes Rückschlagventil (53) mit dem Druckmittelvorratsbehälter (4) verbunden ist.

11. Bremsanlage nach einem der vorhergehenden Ansprüche, **dadurch gekennzeichnet, dass** diese neben der ersten und zweiten Druckquelle (2, 5) kein weitere Druckquelle zum Aufbau eines Bremsdruckes zur Betätigung der Radbremsen umfasst.

12. Bremsanlage nach einem der vorhergehenden Ansprüche, **gekennzeichnet durch** eine Betätigungseinheit für einen Fahrzeugführer, wobei die Betätigungseinheit mit zumindest einer elektronischen Steuervorrichtungen (101, 201) zur Übermittlung eines Fahrerwunschsignals verbunden ist und wobei keine mechanisch-hydraulische Verbindung von der Betätigungseinheit zu den Radbremsen besteht.

## Claims

1. A brake system for a motor vehicle for at least four hydraulically actuatable wheel brakes (8a-8d), said brake system comprising a first electrically actuatable pressure source (5), a first electronic control device (101), a second electrically actuatable pressure source (2), an electrically actuatable inlet valve (6a-6d) for each wheel brake and an electrically actuatable outlet valve (7a-7d) for each wheel brake, a second electronic control device (201), and a pressure medium reservoir (4), wherein the first pressure source (5) and the second pressure source (2) are connected to a brake supply line (13) to which the at least four inlet valves (6a-6d) are connected, wherein an electrically actuatable circuit separating valve (40) is arranged in the brake supply line (13) in such a manner that, when the circuit separating valve (40) is closed, the brake supply line (13) is hydraulically separated into a first line section (13a) and a second line section (13b), wherein the first line section (13a) is hydraulically connected to the second pressure source (2) and at least two of the at least four inlet valves (6a, 6b), and the second line section (13b) is hydraulically connected to the first pressure source (5) and the other, in particular at least two, of the at least four inlet valves (6c, 6d), wherein the first electronic control device (101) controls the first pressure source (5), the second electronic control device (201) controls the second pressure source (2) and the inlet and outlet valves (6a-6d, 7a-7d), and the circuit separating valve (40) are controlled by the second electronic control device (201), **characterized by** a first structural unit (100) in which the first electrically actuatable pressure source (5) is arranged and which comprises the first electronic control device (101), and a second structural unit (200) in which the second electrically actuatable pressure source (2), the electrically actuatable inlet and outlet valves (6a-6d, 7a-7d), and the circuit separating valve (40) are arranged and which comprises the second electronic control device (201).

2. The brake system as claimed in claim 1, **characterized in that** a first electrical partition (A) and a second electrical partition (B) are provided, which are electrically independent of one another, wherein the first pressure source (5) and the first electronic control device (101) are assigned to the first electrical partition (A) and the second pressure source (2), the second electronic control device (201), the inlet and outlet valves (6a-6d, 7a-7d) and the circuit separating valve (40) are assigned to the second electrical partition (B).

3. The brake system as claimed in claim 1 or 2, **characterized in that** the first pressure source (5) is controlled exclusively by the first electronic control device (101) and the second pressure source (2), the inlet and outlet valves (6a-6d, 7a-7d) and the circuit separating valve (40) are controlled exclusively by the second electronic control device (201).

4. The brake system as claimed in claim 3, **characterized in that** the first structural unit (100) and the second structural unit (200) are connected to one another by at most one pressure-resistant hydraulic connecting element (80).

5. The brake system as claimed in claim 3 or 4, **characterized in that** the first structural unit (100) and the second structural unit (200) are connected to one another by only one hydraulic connecting element (80), wherein said connecting element is designed to be pressure-resistant.

6. The brake system as claimed in any one of the preceding claims, **characterized in that** the first pressure source (5) is connected to the brake supply line (13) via an electrically actuatable first separating valve (26), wherein the separating valve (26) is controlled by the second electronic control device (201).

7. The brake system as claimed in claim 6, **characterized in that** the first separating valve (26) is designed to be normally open.

8. The brake system as claimed in any one of the preceding claims, **characterized in that** the first pressure source (5) is connected to the pressure medium reservoir (4) via an electrically actuatable second separating valve (23), wherein the second separating valve (23) is controlled by the first electronic control device (101).

9. The brake system as claimed in claim 8, **characterized in that** the second separating valve (23) is designed to be normally open.

10. The brake system as claimed in any one of the preceding claims, **characterized in that** the first pressure source (5) is connected to the pressure medium reservoir (4) via a check valve (53) which opens in the direction of the first pressure source (5).

11. The brake system as claimed in any one of the preceding claims, **characterized in that**, in addition to the first and second pressure sources (2, 5), the brake system does not comprise a further pressure source for building up a brake pressure for actuating the wheel brakes.

12. The brake system as claimed in any one of the preceding claims, **characterized by** an actuating unit for a vehicle operator, wherein the actuating unit is connected to at least one electronic control device (101, 201) for transmitting a driver demand signal, and wherein there is no mechanical-hydraulic connection from the actuating unit to the wheel brakes.

## Revendications

1. Système de freinage pour véhicule à moteur destiné à au moins quatre freins de roue (8a-8d) actionnables hydrauliquement, comprenant une première source de pression (5) actionnable électriquement, un premier dispositif de commande électronique (101), une seconde source de pression (2) actionnable électriquement, une vanne d'admission (6a-6d) actionnable électriquement pour chaque frein de roue et une vanne d'échappement (7a-7d) actionnable électriquement pour chaque frein de roue, un second dispositif de commande électronique (201) et un réservoir de fluide sous pression (4), dans lequel la première source de pression (5) ainsi que la seconde source de pression (2) sont reliées à une conduite d'alimentation de freinage (13), à laquelle sont raccordées les au moins quatre vannes d'admission (6a-6d), dans lequel une vanne de séparation de circuit (40) actionnable électriquement est disposée dans la conduite d'alimentation de freinage (13) de sorte que, lorsque la vanne de séparation de circuit (40) est fermée, la conduite d'alimentation de freinage (13) est séparée hydrauliquement en un premier tronçon de conduite (13a) et un second tronçon de conduite (13b), dans lequel le premier tronçon de conduite (13a) est relié hydrauliquement à la seconde source de pression (2) et à au moins deux des au moins quatre vannes d'admission (6a, 6b), et le second tronçon de conduite (13b) est relié hydrauliquement à la première source de pression (5) et aux autres, en particulier à au moins deux, des au moins quatre vannes d'admission (6c, 6d), dans lequel le premier dispositif de commande électronique (101) commande la première source de pression (5), le second dispositif de commande électronique (201) commande la seconde source de pression (2) ainsi que les vannes d'admission et d'échappement (6a-6d, 7a-7d), et la vanne de séparation de circuit (40) est commandée par le second dispositif de commande électronique (201), **caractérisé par** une première unité de construction (100) dans laquelle est disposée la première source de pression (5) actionnée électriquement et qui comprend le premier dispositif de commande électronique (101), et une seconde unité de construction (200), dans laquelle sont disposées la seconde source de pression (2) actionnée électriquement, les vannes d'admission et d'échappement (6a-6d, 7a-7d) actionnables électriquement ainsi que la vanne de séparation de circuit (40), et qui comprend le second dispositif de commande électronique (201).

2. Système de freinage selon la revendication 1, **caractérisé en ce qu'**une première partition électrique (A) et une seconde partition électrique (B) sont prévues, lesquelles sont électriquement indépendantes l'une de l'autre, dans lequel la première source de pression (5) et le premier dispositif de commande électronique (101) sont attribués à la première partition électrique (A), et la seconde source de pression (2), le second dispositif de commande électronique (201), les vannes d'admission et d'échappement (6a-6d, 7a-7d) ainsi que la vanne de séparation de circuit (40) sont attribués à la seconde partition électrique (B).

3. Système de freinage selon la revendication 1 ou 2, **caractérisé en ce que** la première source de pression (5) est commandée exclusivement par le premier dispositif de commande électronique (101), et la seconde source de pression (2), les vannes d'admission et d'échappement (6a-6d, 7a-7d) ainsi que la vanne de séparation de circuit (40) sont commandées exclusivement par le second dispositif de commande électronique (201).

4. Système de freinage selon la revendication 3, **caractérisé en ce que** la première unité de construction (100) et la seconde unité de construction (200) sont reliés entre eux par au plus un élément de liaison hydraulique résistant à la pression (80).

5. Système de freinage selon la revendication 3 ou 4, **caractérisé en ce que** la première unité de construction (100) et la seconde unité de construction (200) sont reliées l'une à l'autre par un seul élément de liaison hydraulique (80), dans lequel ledit élément de liaison est réalisé de manière à résister à la pression.

6. Système de freinage selon l'une quelconque des revendications précédentes, **caractérisé en ce que** la première source de pression (5) est reliée à la conduite d'alimentation de freinage (13) par l'intermédiaire d'une première vanne de coupure (26) actionnable électriquement, dans lequel ladite vanne de coupure (26) est commandée par le second dispositif de commande électronique (201).

7. Système de freinage selon la revendication 6, **caractérisé en ce que** la première vanne de coupure (26) est conçue pour être ouverte en absence de courant.

8. Système de freinage selon l'une quelconque des revendications précédentes, **caractérisé en ce que** la première source de pression (5) est reliée au réservoir de fluide sous pression (4) par l'intermédiaire d'une seconde vanne de coupure (23) actionnable électriquement, dans lequel la seconde vanne de coupure (23) est commandée par le premier dispositif de commande électronique (101).

9. Système de freinage selon la revendication 8, **caractérisé en ce que** la seconde vanne de coupure (23) est conçue pour être ouverte en absence de courant.

10. Système de freinage selon l'une quelconque des revendications précédentes, **caractérisé en ce que** la première source de pression (5) est reliée au réservoir de fluide sous pression (4) par l'intermédiaire d'une soupape anti-retour (53) s'ouvrant en direction de la première source de pression (5).

11. Système de freinage selon l'une quelconque des revendications précédentes, **caractérisé en ce qu'**il ne comprend pas, outre la première et la seconde source de pression (2, 5), d'autre source de pression pour établir une pression de freinage destinée à actionner les freins de roue.

12. Système de freinage selon l'une quelconque des revendications précédentes, **caractérisé par** une unité d'actionnement destinée au conducteur du véhicule, dans lequel l'unité d'actionnement est reliée à au moins un dispositif de commande électronique (101, 201) pour transmettre un signal représentant la volonté du conducteur, et dans lequel aucune liaison mécano-hydraulique n'existe entre l'unité d'actionnement et les freins de roue.
